# EUROPÄISCHE PATENTANMELDUNG

(11) **EP 4 789 845 A1**
(43) Veröffentlichungstag der Anmeldung: **12.08.2026**
(21) Anmeldenummer: 26157311.7
(22) Anmeldetag: 09.02.2026
(51) Int. Cl.: B29C 63/06, B29C 63/10

(54) **VORRICHTUNG ZUM UMMANTELN VON ROHREN MIT FASERVERSTÄRKTEM KUNSTSTOFF**

(30) Priorität: 10.02.2025 DE 202025100666 U
(71) Anmelder: RFD Innovations AG, 6004 Luzern (CH)
(72) Erfinder: WELKER, Daniel, 6004 Luzern (CH); WELKER, Ruirui, 6004 Luzern (CH)
(74) Vertreter: Eisenführ Speiser

(57) **Zusammenfassung**

Die Erfindung betrifft eine Ummantelungsvorrichtung (10) zum Ummanteln eines Rohres (12) mit Fasern (14), die in einer Kunststoffmatrix eingebettet sind. Die Ummantelungsvorrichtung (10) folgendes umfasst:
- eine Rohrhalterung (20), die dazu ausgebildet ist, ein zu ummantelndes Rohr (12) während der Ummantelung derart zu halten, dass das Rohr um seine Längsachse drehbar ist,
- eine Faserzuführung (30), die dazu ausgebildet ist, von Textilglasfasern in Form von Rovings oder Fasergebinden gebildete Faserbändern einem zu ummantelnden Rohr derart zuzuführen, dass die zugeführten Fasern helixartig um das Rohr gewickelt werden, während sich das Rohr (12) um seine Längsachse dreht, wobei die Faserzuführung entlang der Längsachse kontinuierlich derart beweglich ist, dass die zugeführten Textilglasfasern helixartig derart um das Rohr gewickelt werden, dass sich Bahnen der zugeführten Fasern in Längsrichtung des Rohres um mindestens 50 % überlappen,
- einen Verschiebeantrieb (50), der dazu ausgebildet ist, die Faserzuführung (30) entlang der Längsachse des zu ummantelnden Rohres derart zu verschieben, dass die Faserzuführung während einer jeweiligen Umdrehung des Rohres um eine Strecke verschoben wird, die maximal der Hälfte einer Breite eines zuzuführenden Faserbandes entspricht, und
- eine Harzzuführung (40), die ausgebildet ist, dem Rohr zuzuführende Fasern mit einem flüssigen, aushärtbaren Harz zu tränken, sodass das zu ummantelnde Rohr im Betrieb der Ummantelungsvorrichtung (10) mit in flüssiges, aushärtbares Harz getränkten Fasern (14) umwickelt wird.

## Beschreibung

Die Erfindung betrifft eine Vorrichtung zum Ummanteln von Rohren mit faserverstärktem Kunststoff. Ein anderer Aspekt betrifft die Verwendung einer derartigen Vorrichtung zur Ummantelung von Rohren.

Rohre, insbesondere Stahlrohre, für die offene oder grabenlose Verlegung werden auf ihrer Außenseite häufig mit einer Korrosionsschutzschicht versehen, die beispielsweise von einem Thermoplast gebildet sein kann. Es ist auch bekannt, ein Stahlrohr mit einer Korrosionsschutzschicht aus Fusion-bonded Epoxy (FBE) zu versehen, eventuell zusätzlich mit einer haftungsvermittelnden Schicht und einer Thermoplastschicht. Eine Thermoplastschicht besteht häufig aus Polyethylen (PE) oder Polypropylen (PP). Auf der Außenseite des Rohres bzw. - falls vorhanden - der Korrosionsschutzschicht kann eine Ummantelung aus faserverstärktem Kunstostoff aufgebracht sein. Diese Ummantelung dient dem mechanischen Schutz der Korrosionsschutzschicht oder der Korrosionsschutzschichten oder des Korrosionsschutzes des Rohres oder dem Verbessern anderer z. B. statischer Eigenschaften des Rohres.

Die vorliegende Erfindung betrifft das Aufbringen der faserverstärkten Schutzummantelung auf ein Rohr.

Eine Vorrichtung zum Ummanteln eines Rohres mit Fasern, die in einer Kunststoffmatrix eingebettet sind, umfasst eine Rohrhalterung, die dazu ausgebildet ist, ein zu ummantelndes Rohr während der Ummantelung derart zu halten, dass das Rohr um seine Längsachse drehbar ist.

Die Ummantelungsvorrichtung umfasst außerdem eine Faserzuführung, die dazu ausgebildet ist, Fasern, insbesondere Textilglasfasern in Form von Rovings oder Fasergebinden einem zu ummantelnden Rohr derart zuzuführen, die zugeführten Fasern helixartig um das Rohr gewickelt werden, während sich das Rohr um seine Längsachse dreht, die Faserzuführung wird dabei entlang der Längsachse kontinuierlich derart bewegt, dass die zugeführten Textilglasfasern helixartig um das Rohr gewickelt werden, wobei sich Bahnen der zugeführten Fasern in Längsrichtung des Rohres um mindestens 50 % überlappen. Hierzu ist die Ummantelungsvorrichtung vorzugsweise derart konfiguriert, dass die Faserzuführung samt Harzzuführung gleichmäßig entlang des zu ummantelnden Rohres verschoben werden, während sich das Rohr gleichmäßig um seine Rohrlängsachse dreht, wobei die Rotationsgeschwindigkeit des Rohres und die Vorschubgeschwindigkeit der die Faserzuführung samt Harzzuführung so aufeinander und die Breite des jeweiligen Faserbands abgestimmt sind, dass sich ein Überlappungsgrad der aufeinander folgenden Windungen des Faserbands von mindesten 50%, vorzugsweise mehr als 70 % bis hin zu 95 % ergibt.

Die Zufuhrvorrichtung weist zu diesem Zweck einen Verschiebeantrieb auf, der dazu ausgebildet ist, die Faserzuführung entlang der Längsachse des zu ummantelnden Rohres zu verschieben und zwar derart, dass die Faserzuführung während einer jeweiligen Umdrehung des Rohres um eine Strecke verschoben wird, die maximal der Hälfte einer Breite eines zuzuführenden Faserbandes entspricht.

Ein Faserband kann dabei von einer Vielzahl parallel verlaufender Rovings gebildet sein oder aber auch von Fasergeweben oder Fasergelegen.

Die Faserzuführung ist weiter dazu ausgebildet, die zugeführten Fasern unter Zugspannung zu halten, wobei die die Zugspannung bewirkende Zugkraft vorzugsweise 2 bis 5 Newton pro Faden beträgt, wobei ein Faden beispielsweise ein Roving ist. Wenn ein Faserband beispielsweise von 100 parallel zueinander verlaufenden Rovings gebildet ist, beträgt die Zugkraft beispielsweise 200 N bis 500 N. Da die zuzuführenden Fasern während der Ummantelung von dem sich drehenden Rohr von der Faserzuführung abgezogen werden, weist die Faserzuführung eine Bremseinrichtung und/oder eine oder mehrere Umlenkrollen auf, die die gewünschte Zugspannung zum Spannen der Fasern beim Umwickeln bewirkt.

Die Ummantelungsvorrichtung weist außerdem eine Harzzuführung auf, die ausgebildet ist, dem Rohr zuzuführende Fasern mit einem flüssigen, aushärtbaren Harz zu tränken, sodass das zu ummantelnde Rohr mit in flüssiges, aushärtbares Harz getränkten Fasern umwickelt wird. Das Harz kann beispielsweise ein Polyesterharz sein (UP) oder ein Vinylesterharz (VE). In Ausnahmefällen kann das Harz auch ein Epoxidharz sein. Vorzugsweise ist das Harz ein styrolfreies, unter UV-Licht-Einwirkung aushärtendes Harz. Die Harzzuführung kann ein Harzbad umfassen, durch das die dem Rohr zuzuführenden Fasern geführt werden. Alternativ oder zusätzlich kann die Harzzuführung eine Harzdusche sein oder enthalten, bei der flüssiges Harz aus einem Harzspender, beispielsweise einer Leitung oder einem Behälter oberhalb der zu tränkenden Fasern auf die Fasern tropft oder strömt. Unterhalb der zu tränkenden Fasern kann eine Auffangeinrichtung vorgesehen sein, die das flüssige Harz, das nicht an den Fasern verbleibt, auffängt. Das flüssige Harz strömt hierbei durch die Luft, so dass sich ein Vorhang aus flüssigem Harz bildet, durch den die dem Rohr zuzuführenden Fasern hindurchgeführt werden. Der Harzspender kann auch oberhalb des Rohres dort platziert sein, wo die Fasern auf die Mantelfläche des Rohres treffen. In diesem Fall erübrigt sich eine Auffangeinrichtung.

Vorzugsweise weist die Ummantelungsvorrichtung mindestens einen UV-Strahler auf, der dazu ausgebildet ist, auf das Rohr gewickelte, mit zunächst flüssigem Harz getränkte Fasern mit UV-Licht zu bestrahlen, um auf diese Weise ein UV-Härten des Harzes zu bewirken. Hierzu ist der UV-Strahler ebenfalls verschieblich angeordnet und kann sich im Betrieb beispielsweise mit gleicher Geschwindigkeit entlang der Längsrichtung des Rohres bewegen, wie die Faserzuführung. Vorzugsweise ist der UV-Strahler derart angeordnet, dass er auf eine Umfangsposition des Rohres gerichtet ist, bei der der Umschlingungswinkel frisch auf das Rohr gewickelter Fasern maximal 180° beträgt. Als Umschlingungswinkel wird hier ein Winkel bezeichnet, der von dem Ort ausgeht, an dem die Fasern tangential dem Umfang des Rohres zugeführt werden und das Rohr erstmalig berühren. Vorzugsweise ist der UV-Strahler so angeordnet, dass kein UV-Licht auf die harzgetränkten Fasern trifft, bevor sie auf dem Rohr aufliegen. Für den UV-Strahler kann auch eine Abschirmglocke vorgesehen sein, die sicherstellt, dass die UV-Strahlung nur auf einen definierten Sektor des Rohres trifft, der beispielsweise 25 % bis 50 % des Rohrumfangs umfassen kann.

Gemäß einer alternativen Ausführungsform ist der UV-Strahler auf derjenigen Seite des zu ummantelnden Rohres angeordnet, von der auch das Faserband zugeführt wird.

Während Faserzuführung und Harzzuführung vorzugsweise von einem einzigen Verschiebantrieb - und damit synchron - bewegt werden, kann der UV-Strahler auch unabhängig von Faserzuführung und Harzzuführung beweglich sein. Dies erlaubt es beispielsweise, zunächst ein Rohr komplett zu ummanteln und das Harz, in das die Fasern eingebettet sind, erst anschließend mittels des UV-Strahlers zu härten. Insbesondere kann dann das Aushärten des Harzes an einem ersten ummantelten Rohr mittels des UV-Strahlers erfolgen, während ein zweites Rohr gleichzeitig mittels der Faserzuführung und Harzzuführung ummantelt wird.

Die Ummantelungsvorrichtung erlaubt es, Faserbänder mit einem hohen Überlappungsgrad um ein zu ummantelndes Rohr zu umwickeln. Ein hoher Überlappungsgrad sorgt für eine ausreichende Dicke der fertigen Ummantelung. Wenn der Überlappungsgrad beispielsweise 80 % beträgt, verfünffacht sich die Dicke der Ummantelung im Verhältnis zur Dicke einem einfachen Faserband, weil im Ergebnis fünf Schichten von Faserbändern übereinanderliegen. Dabei besteht grundsätzlich das Problem, dass insbesondere bei mittels UV-Licht aushärtenden Harzen gewährleistet sein muss, dass die Intensität des UV-Lichts ausreichend hoch sein muss. Bei großen Schichtdicken besteht die Gefahr, dass die Intensität des UV-Lichtes nur auf einer Außenseite der Schicht ausreichend hoch ist und das UV-Licht nicht mit ausreichender Intensität bis in tiefere Schichttiefen eindringen kann. Dadurch, dass erfindungsgemäß der UV-Strahler immer unmittelbar auf die frisch aufgewickelten, in zunächst flüssigen Harz getränkten Fasern einwirkt, muss immer nur eine einzelne Schicht ausgehärtet werden. Daher ist es vorteilhaft, wenn der UV-Strahler synchron mit der Faserzuführung und der Harzzuführung verschoben wird und so angeordnet ist, dass immer das Harz frisch auf die Mantelfläche des Rohres aufgebrachter Fasern mit UV-Licht bestrahlt und somit gehärtet wird.

In einer vorteilhaften Ausführungsvariante weist die Faserzuführung der Ummantelungsvorrichtung mehrere Vorratsspulen mit Textilglasfasern in Form von Rovings oder Fasergebinden auf und ist dazu ausgebildet, Textilglasfasern von den mehreren Vorratsspulen zu einem Faserband zusammenzuführen. Dies erlaubt es, ein Faserband in einem Durchgang für eine finale Laminatdicke aus gleichen oder unterschiedlichen Faser-, Gebinde- oder Gewebetypen zusammenzustellen und auf das zu ummantelnde Rohr zu wickeln. Das Faserband bewirkt dann eine Single Multilayer-Schicht. Für eine Dicke der Ummantelung von beispielsweise 5 mm und einem Überlappungsgrad von 80 % kann das zusammengeführte Faserband beispielsweise eine Dicke von 1 mm haben.

Bei dieser Ausführungsvariante sind die Faserzuführung und die Harzzuführung vorzugsweise derart angeordnet, dass die Harzzuführung das Faserband im Betrieb der Ummantelungsvorrichtung nach dem Zusammenführen mit dem flüssigen, aushärtbaren Harz getränkt wird.

Die Ummantelungsvorrichtung ist vorzugsweise ausgebildet, ein Verfahren mit den folgenden Schritten auszuführen:
- Bereitstellen von Textilglasfasern, vorzugsweise auf einer oder mehreren Vorratsspulen
- Führen der Textilglasfasern zu einem zu ummantelnden Rohr
- Tränken der Textilglasfasern mit einem flüssigen, aushärtenden oder aushärtbaren Harz,
- Umwickeln eines zu ummantelnden Rohres mit den in Harz getränkten Textilglasfasern,
wobei das zu ummantelnde Rohr um seine Rohrlängsachse rotiert und der Ort des Auftreffens der Textilglasfasern in Rohrlängsrichtung verschoben wird, während das Rohr rotiert, so dass die Textilglasfasern entlang einer helixförmigen Bahn auf das Rohr gewickelt werden. Während das Rohr rotiert wird eine Faserzuführung entlang der Längsachse des zu ummantelnden Rohres derart in Rohrlängsrichtung verschoben, dass die Textilglasfasern entlang einer helixförmigen Bahn um das Rohr gewickelt werden, wobei die Faserzuführung während einer jeweiligen Umdrehung des Rohres um eine Strecke verschoben wird, die maximal der Hälfte einer Breite eines zuzuführenden Faserbandes entspricht, so dass sich die Faserbahnen pro Windung oder Umdrehung um mindestens 50% überlappen.

Vorzugsweise werden die Textilglasfasern während des Umwickelns unter Zugspannung gehalten. Dies kann dadurch erfolgen, dass die Textilglasfasern von dem sich drehenden Rohr von der Vorratsspule oder den Vorratsspulen abgezogen werden und dabei gebremst werden, so dass sich eine definierte Zugkraft ergibt.

Vorzugsweise werden mehrere Textilglasfasern von mehreren Vorratsspulen abgezogen und zu einem Faserband zusammengeführt. Das Tränken der Textilglasfasern erfolgt vorzugsweise nach dem Zusammenführen der Textilglasfasern zu dem Faserband.

Das von der Ummantelungsvorrichtung durchgeführte Verfahren umfasst vorzugsweise auch ein Aushärten des zunächst flüssigen Harzes, nachdem die Textilglasfasern auf die Umfangsfläche des Rohres aufgebracht sind. Zum Aushärten des Harzes werden die harzgetränkten, auf die Umfangsfläche des Rohres aufgebrachten Textilglasfasern vorzugsweise mit UV-Licht bestrahlt.

Die Erfindung soll nun anhand von Ausführungsbeispielen mit Bezug auf die Figuren näher erläutert werden. Letztere zeigen in
- Fig. 1:: eine erste Variante einer Ummantelungsvorrichtung in einer skizzenhaften Ansicht entlang einer Rohrlängsachse eines zu ummantelnden Rohres;
- Fig. 2:: eine zweite Variante einer Ummantelungsvorrichtung in einer skizzenhaften Ansicht entlang einer Rohrlängsachse eines zu ummantelnden Rohres;
- Fig. 3:: eine dritte Variante einer Ummantelungsvorrichtung in einer skizzenhaften Ansicht entlang einer Rohrlängsachse eines zu ummantelnden Rohres;
- Fig. 4:: eine skizzenhafte Aufsicht auf eine Ummantelungsvorrichtung gemäß Figur 1 oder 2;
- Fig. 5:: eine dritte Variante einer Ummantelungsvorrichtung in einer skizzenhaften Aufsicht;
- Fig. 6:: die dritte Variante einer Ummantelungsvorrichtung bei im Vergleich zu Figur 5 weiter umwickelten Rohr in einer skizzenhaften Aufsicht; und
- Fig. 7:: eine schematische Illustration zur Erläuterung des Überlappungsgrads.

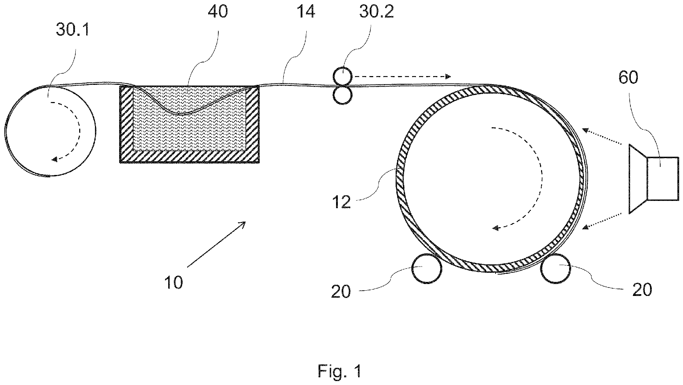

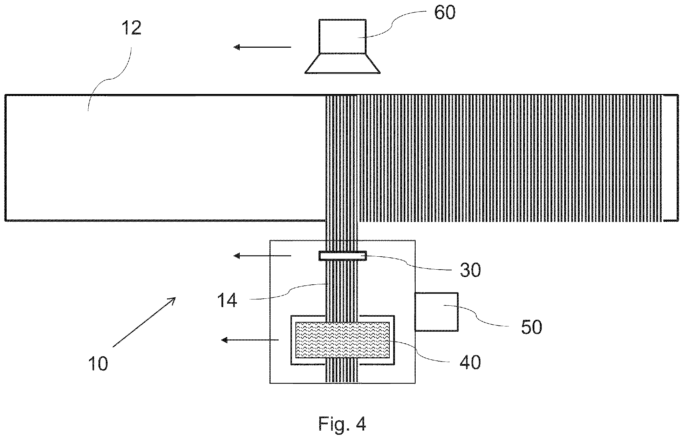

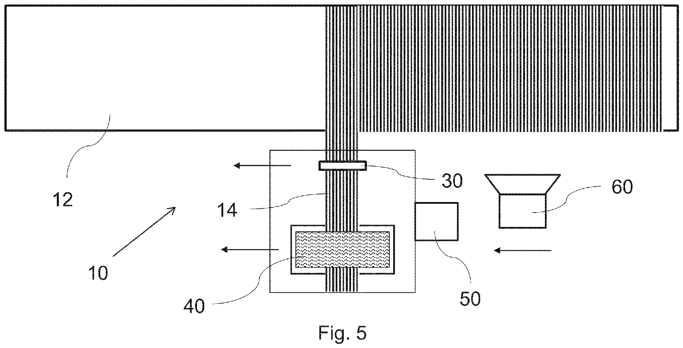

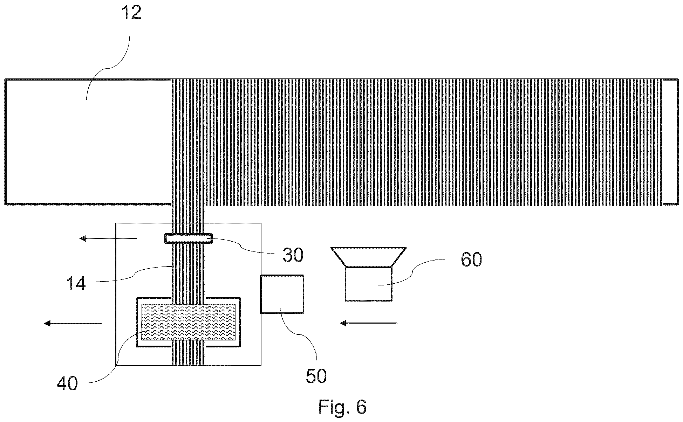

Die in den Figuren 1 bis 6 abgebildeten Varianten einer Ummantelungsvorrichtung 10 zum Umwickeln eines zu ummantelnden Rohres 12 mit in Harz getränkten Faserbändern 14, die vorzugsweise von Glasfasern gebildet sind, umfassen jeweils als Hauptkomponenten eine Rohrhalterung 20, eine Faserzuführung 30, eine Harzzuführung 40, einen Verschiebeantrieb 50 und einen UV-Strahler 60.

Die Rohrhalterung 20 ist so konfiguriert, dass das zu ummantelnde Rohr 12 um dessen Rohrlängsachse drehend angetrieben werden kann. Vorzugsweise hält die Rohrhalterung 20 das jeweilige zu ummantelnde Rohr 12 an dessen beiden freien Längsenden. Im dargestellten Ausführungsbeispiel weist die Rohrhalterung 20 Stützrollen 20.1 und 20.2 auf.

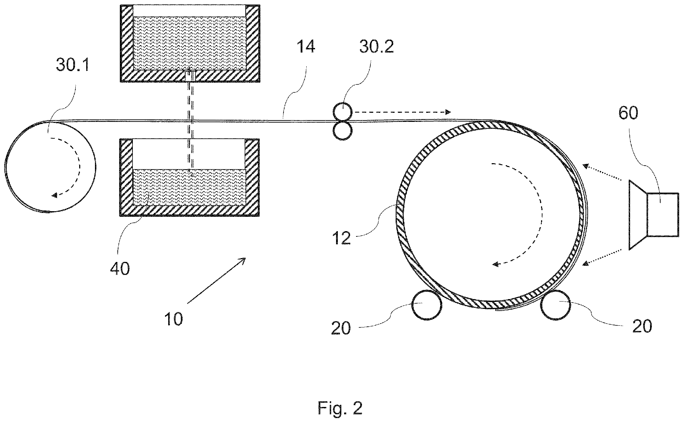

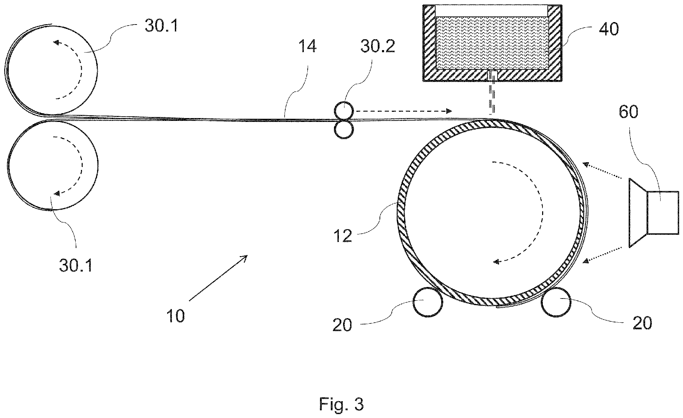

Die Faserzuführung 30 umfasst eine oder mehrere Vorratsspulen 30.1 mit darauf aufgewickelten Glasfasern 14 oder Faserbändern 14.1 in Form von Fasergeweben oder Fasergelegen, die im Verlauf eine Rohrummantelung von der Vorratsspule 30.1 abgewickelt werden. Figuren 1 und 2 illustrieren ein Ausführungsbeispiel mit einer Vorratsspule 30.1, auf die ein Faserband aufgewickelt ist. Figur 3 illustriert ein Ausführungsbeispiel, bei dem die Fasern in Form von Rovings vorliegen, die von mehreren Vorratsspulen 30.1 auf einzelnen Spulständern abgewickelt über ein Gitter in die Form eines Bandes zusammengeführt werden.

Außerdem weist die Faserzuführung 30 zwischen der Vorratsspule 30.1 oder den Vorratsspulen und dem zu ummantelnden Rohr 12 Führungs- und Bremswalzen 30.2 auf, zwischen denen die Fasern 14 hindurchgeführt sind. Die Führungs- und Bremswalzen 30.2 dienen dazu, eine Zugspannung in den Fasern einzustellen, damit die Fasern 14 unter leichter Spannung um das zu ummantelnde Rohr gewickelt werden. Bei einem von 100 parallel zueinander verlaufenden Rovings gebildeten Faserband beträgt die Bremskraft und damit die auf das Faserband wirkende Zugkraft beispielsweise zwischen 200 N und 500 N.

Die Harzzuführung 40 dient dazu, die Fasern 14 mit Harz zu tränken, bevor sie auf das zu ummantelnde Rohr 12 aufgewickelt werden. Die Harzzuführung 40 ist vorzugsweise zwischen der Vorratsspule 30.1 und den Führungs- und Bremswalzen 30.2 angeordnet, denn dann können die Führungs- und Bremswalzen 30.2 überschüssiges Harz auf den harzgetränkte Fasern 14 quetschen.

In der in Figur 1 dargestellten Ausführungsvariante weist die Harzzuführung 40 ein flüssiges Harz 40.2 enthaltendes Harzbad 40.1 auf, durch das die Fasern 14 hindurchgeführt werden.

In den in Figuren 2 und 3 dargestellten Ausführungsvarianten weist die Harzzuführung 40 eine Harzdusche auf, bei der flüssiges Harz 40.2 aus einem Harzspender 40.3 oberhalb der zu tränkenden Fasern 14 auf die Fasern tropft oder strömt.

Bei der in Figur 2 dargestellten Ausführungsvariante ist unterhalb der zu tränkenden Fasern 14 eine Auffangeinrichtung 40.4 angeordnet, die flüssiges Harz, das nicht an den fasern verbleibt, auffängt. Bei dieser Ausführungsvariante strömt das flüssige Harz aus dem Harzspender 40.3 durch die Luft in die Auffangeinrichtung 40.4, so dass sich ein Vorhang 40.5 aus flüssigem Harz bildet, durch den die dem zu ummantelnden Rohr 12 zuzuführenden Fasern 14 hindurchgeführt werden. Die Auffangeinrichtung 40.4 und der Harzspender 40.3 können fluidtechnisch so miteinander verbunden sein, dass das flüssige Harz zwischen der Auffangeinrichtung 40.4 und dem Harzspender 40.3 zirkuliert.

Bei der in Figur 3 dargestellten Ausführungsvariante ist der Harzspender oberhalb des Rohres dort platziert, wo die Fasern auf die Mantelfläche des Rohres treffen. In diesem Fall erübrigt sich eine Auffangeinrichtung.

Um die Fasern 14 in Form von Faserbändern helixartig um das zu ummantelnde Rohr 12 zu wickeln, werden die Faserzuführung 30 und die Harzzuführung 40 kontinuierlich entlang der Rohrlängsachse des zu ummantelnden Rohres 12 verschoben, während sich das Rohr 12 ebenfalls kontinuierlich um seine Rohrlängsachse dreht und die Fasern 14 von der Vorratsspule 30.1 abzieht. Dies führt dazu, dass das faserband helixartig um das Rohr 12 gewickelt wird. In den Figuren 3 bis 5 ist die Steigung der Helix aus zeichnerischen Gründen nicht erkennbar.

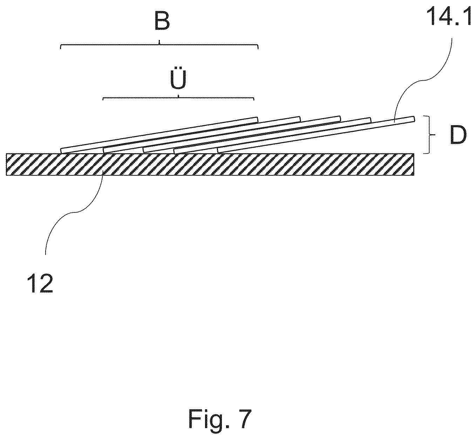

Die Rotationsgeschwindigkeit des Rohres und die Vorschubgeschwindigkeit der Faserzuführung 30 samt Harzzuführung 40 sind so aufeinander und die Breite des jeweiligen Faserbands abgestimmt, dass sich ein Überlappungsgrad der aufeinander folgenden Windungen des Faserbands von mindesten 50 %, vorzugsweise mehr als 70 % bis hin zu 95 % ergibt; siehe Figur 7. Der Überlappungsgrad ist das Verhältnis Ü/B von Überlappungslänge Ü zur Breite B eines Faserbands 14.1. Dies bedeutet, dass die Steigung der von dem Faserband gebildeten Helix zwischen der Hälfte und einem Zwanzigstel der Breite B des Faserbandes 14.1 beträgt.

Durch den hohen Überlappungsgrad können leicht größere Schichtdicken D der Ummantelung 70 erzeugt werden, so dass Rohre in einem Durchgang - d. h. während einer einzigen Verschiebung der Faserzuführung 30 samt Harzzuführung 40 entlang des Rohres 12 - mit einer ausreichend dicken Ummantelung 70 von z. B. 5 mm bis 15 mm Dicke oder mehr erzeugt werden können.

Zum gleichmäßigen Verschieben von Faserzuführung 30 samt Harzzuführung 40 entlang der Rohrlängsachse des Rohres 12 ist ein Verschiebantrieb 50 vorgesehen.

Das verwendete Harz ist ein vorzugsweise styrolfreies unter UV-Licht Einwirkung aushärtendes Vinylester- (VE) oder Polyesterharz (UP).

Zum Aushärten des Harzes ist daher ein UV-Strahler 60 vorgesehen, mit dem das die auf das Rohr gewickelten Faserbänder umgebende, zunächst flüssige Harz UV-beleuchtet und damit ausgehärtet werden kann. Der UV-Strahler 60 ist so angeordnet, dass das von ihm ausgehende UV-Licht nicht auf die harzgetränkten Faser 14 trifft, bevor diese auf der Mantelfläche des Rohres 12 aufliegen.

Gemäß bevorzugter Ausführungsvarianten wird der UV-Strahler 60 ebenso entlang des Rohres 12 verschoben, wie die Faserzuführung 30 samt Harzzuführung 40.

Im Betrieb führt die Ummantelungsvorrichtung ein Verfahren mit den folgenden Schritten durch:
- Bereitstellen von Textilglasfasern 14, vorzugsweise auf einer oder mehreren Vorratsspulen 30.1
- Führen der Textilglasfasern 14 zu dem zu ummantelnden Rohr 12,
- Tränken der Textilglasfasern 14 mit einem flüssigen, aushärtenden oder aushärtbaren Harz,
- Umwickeln eines zu ummantelnden Rohres 12 mit den in Harz getränkten Textilglasfasern 14,
wobei das zu ummantelnde Rohr 12 um seine Rohrlängsachse rotiert und der Ort des Auftreffens der Textilglasfasern 12 auf die Umfangsfläche des Rohres 12 in Rohrlängsrichtung verschoben wird, während des Rohr 12 rotiert, so dass die Textilglasfasern 14 entlang einer helixförmigen Bahn auf das Rohr 12 gewickelt werden.

Vorzugsweise werden die Textilglasfasern 14 während des Umwickelns unter Zugspannung gehalten. Dies kann dadurch erfolgen, dass die Textilglasfasern 14 von dem sich drehenden Rohr 12 von der Vorratsspule 30.1 oder den Vorratsspulen abgezogen werden und dabei gebremst werden, so dass sich eine definierte Zugkraft ergibt.

Vorzugsweise werden mehrere Textilglasfasern von mehreren Vorratsspulen 30.1 abgezogen und zu einem Faserband zusammengeführt, wie dies in Figur 3 dargestellt ist. Das Tränken der Textilglasfasern 14 erfolgt vorzugsweise nach dem Zusammenführen der Textilglasfasern zu dem Faserband 14.1.

Das von der Ummantelungsvorrichtung 10 durchgeführte Verfahren umfasst vorzugsweise auch ein Aushärten des zunächst flüssigen Harzes, nachdem die Textilglasfasern 14 auf die Umfangsfläche des Rohres 12 aufgebracht sind. Zum Aushärten des Harzes werden die harzgetränkten, auf die Umfangsfläche des Rohres aufgebrachten Textilglasfasern vorzugsweise mit UV-Licht bestrahlt. Hierzu ist vorzugsweise der UV-Strahler 60 vorgesehen.

### Bezugszeichenliste

- 10: Ummantelungsvorrichtung
- 12: zu ummantelndes Rohr
- 14: Fasern, Glasfasern,
- 14.1: Faserband
- 20: Rohrhalterung
- 20.1, 20.2: Stützrollen
- 30: Faserzuführung
- 30.1: Vorratsspule mit einem Faserband
- 30-2: Führungs- und Bremswalzen
- 40: Harzzuführung
- 40.1: Harzbad
- 40.2: Harzspender
- 40.3: Auffangeinrichtung
- 40.4: Vorhang aus flüssigen Harz
- 50: Verschiebeantrieb
- 60: UV-Strahler
- 70: Ummantelung

## Patentansprüche

1. Ummantelungsvorrichtung (10) zum Ummanteln eines Rohres (12) mit Fasern (14), die in einer Kunststoffmatrix eingebettet sind, wobei die Ummantelungsvorrichtung (10) folgendes umfasst:
- eine Rohrhalterung (20), die dazu ausgebildet ist, ein zu ummantelndes Rohr (12) während der Ummantelung derart zu halten, dass das Rohr um seine Längsachse drehbar ist,
- eine Faserzuführung (30), die dazu ausgebildet ist, von Textilglasfasern in Form von Rovings oder Fasergebinden gebildete Faserbändern einem zu ummantelnden Rohr derart zuzuführen, dass die zugeführten Fasern helixartig um das Rohr gewickelt werden, während sich das Rohr (12) um seine Längsachse dreht, wobei die Faserzuführung entlang der Längsachse kontinuierlich derart beweglich ist, dass die zugeführten Textilglasfasern helixartig derart um das Rohr gewickelt werden, dass sich Bahnen der zugeführten Fasern in Längsrichtung des Rohres um mindestens 50 % überlappen,
- einen Verschiebeantrieb (50), der dazu ausgebildet ist, die Faserzuführung (30) entlang der Längsachse des zu ummantelnden Rohres derart zu verschieben, dass die Faserzuführung während einer jeweiligen Umdrehung des Rohres um eine Strecke verschoben wird, die maximal der Hälfte einer Breite eines zuzuführenden Faserbandes entspricht, und
- eine Harzzuführung (40), die ausgebildet ist, dem Rohr zuzuführende Fasern mit einem flüssigen, aushärtbaren Harz zu tränken, sodass das zu ummantelnde Rohr im Betrieb der Ummantelungsvorrichtung (10) mit in flüssiges, aushärtbares Harz getränkten Fasern (14) umwickelt wird.

2. Ummantelungsvorrichtung (10) gemäß Anspruch 1, die einen UV-Strahler (60) aufweist, der dazu ausgebildet ist, auf das Rohr gewickelte, mit zunächst flüssigem Harz getränkte Fasern mit UV-Licht zu bestrahlen, um auf diese Weise ein UV-Härten des Harzes zu bewirken, wobei der UV-Strahler ebenfalls verschieblich angeordnet ist und sich entlang der Längsrichtung des Rohres bewegt.

3. Ummantelungsvorrichtung (10) gemäß Anspruch 1 oder 2, bei der die Harzzuführung (40) einen oberhalb eines dem zu ummantelnden Rohr zuzuführenden Faserbandes (14.1) angeordnete Harzspender aufweist, aus dem im Betrieb flüssiges Harz durch die Luft vorhangartig auf die zu tränkenden Fasern tropft oder strömt.

4. Ummantelungsvorrichtung (10) gemäß Anspruch 3, bei der die Harzzuführung (40) eine unterhalb eines dem zu ummantelnden Rohr zuzuführenden Faserbandes (14.1) angeordnete Auffangeinrichtung aufweist, die derart konfiguriert sind, dass im Betrieb flüssiges Harz aus dem Harzspender durch die Luft vorhangartig in die Auffangeinrichtung strömt und so einen Harzvorhang bildet, durch den das dem zu ummantelnden Rohr zuzuführende Faserband (14.1) hindurchtritt.

5. Ummantelungsvorrichtung (10) gemäß wenigstens einem der Ansprüche 1 bis 4, die derart konfiguriert ist, dass die Faserzuführung (30) samt Harzzuführung (40) gleichmäßig entlang des zu ummantelnden Rohres (12) verschoben werden, während sich das Rohr (12) gleichmäßig um seine Rohrlängsachse dreht, wobei die Rotationsgeschwindigkeit des Rohres (12) und die Vorschubgeschwindigkeit der die Faserzuführung (30) samt Harzzuführung (40) so aufeinander und die Breite des jeweiligen Faserbands (14.1) abgestimmt sind, dass sich ein Überlappungsgrad der aufeinander folgenden Windungen des Faserbands (14.1) von mindesten 50 %, vorzugsweise mehr als 70 % bis hin zu 95 % ergibt.

6. Ummantelungsvorrichtung (10) gemäß wenigstens einem der Ansprüche 1 bis 5, bei der die Faserzuführung (30) mehrere Vorratsspulen (30.1) mit Textilglasfasern in Form von Rovings oder Fasergebinden aufweist, wobei die Faserzuführung (30) dazu ausgebildet ist, Textilglasfasern von den mehreren Vorratsspulen (30.1) zu einem Faserband (14.1) zusammenzuführen.

7. Ummantelungsvorrichtung (10) gemäß Anspruch 6, bei der die Faserzuführung (30) und die Harzzuführung (40) derart angeordnet sind, dass die Harzzuführung (40) das Faserband (14.1) im Betrieb der Ummantelungsvorrichtung (10) nach dem Zusammenführen mit dem flüssigen, aushärtbaren Harz tränkt.

8. Ummantelungsvorrichtung (10) gemäß wenigstens einem der Ansprüche 1 bis 7, die dazu konfiguriert ist, in einem Wickeldurchgang von einem Längsende des zu ummantelnden Rohres (12) zu dessen anderem Längsende eine Schichtdicke der Ummantelung von wenigstens 5 mm zu erzeugen.

9. Ummantelungsvorrichtung (10) gemäß wenigstens einem der Ansprüche 1 bis 8, bei der die Harzzuführung zum Tränken des Faserbandes mit einem unter UV-Licht härtenden Vinylester- oder Polyesterharz ausgebildet ist.

10. Die Ummantelungsvorrichtung (10) gemäß einem der Ansprüche 1 bis 9, die dazu ausgebildet ist, ein Verfahren mit den folgenden Schritten auszuführen:
- Bereitstellen von Textilglasfasern (14), vorzugsweise auf einer oder mehreren Vorratsspulen,
- Führen der Textilglasfasern zu einem zu ummantelnden Rohr (12),
- Tränken der Textilglasfasern (14, 14.1) mit einem flüssigen, aushärtenden oder aushärtbaren Harz,
- Umwickeln eines zu ummantelnden Rohres (12) mit den in Harz getränkten Textilglasfasern (14, 14.1),
wobei das zu ummantelnde Rohr (12) um seine Rohrlängsachse rotiert und während das Rohr (12) rotiert eine Faserzuführung (30) entlang der Längsachse des zu ummantelnden Rohres derart in Rohrlängsrichtung verschoben wird, dass die Textilglasfasern (14) entlang einer helixförmigen Bahn um das Rohr (12) gewickelt werden, wobei die Faserzuführung während einer jeweiligen Umdrehung des Rohres um eine Strecke verschoben wird, die maximal der Hälfte einer Breite eines zuzuführenden Faserbandes entspricht.

11. Verfahren zum Ummanteln eines Rohres (12) mit Fasern (14), die in einer Kunststoffmatrix eingebettet sind, wobei das Verfahren die folgenden Schritten umfasst:
- Bereitstellen von Textilglasfasern, vorzugsweise auf einer oder mehreren Vorratsspulen
- Führen der Textilglasfasern zu einem zu ummantelnden Rohr
- Tränken der Textilglasfasern mit einem flüssigen, aushärtenden oder aushärtbaren Harz,
- Umwickeln eines zu ummantelnden Rohres mit den in Harz getränkten Textilglasfasern,
wobei das zu ummantelnde Rohr (12) um seine Rohrlängsachse rotiert und während das Rohr (12) rotiert eine Faserzuführung (30) entlang der Längsachse des zu ummantelnden Rohres derart in Rohrlängsrichtung verschoben wird, dass die Textilglasfasern (14) entlang einer helixförmigen Bahn um das Rohr (12) gewickelt werden, wobei die Faserzuführung während einer jeweiligen Umdrehung des Rohres um eine Strecke verschoben wird, die maximal der Hälfte einer Breite eines zuzuführenden Faserbandes entspricht.

12. Verfahren gemäß Anspruch 11, bei dem die Textilglasfasern während des Umwickelns unter Zugspannung gehalten werden.

13. Verfahren gemäß Anspruch 12, bei dem die Textilglasfasern von dem sich drehenden Rohr von einer Vorratsspule oder mehreren Vorratsspulen abgezogen und die Vorratsspule oder die Vorratsspulen dabei gebremst werden, so dass sich eine definierte Zugkraft ergibt.

14. Verfahren gemäß einem der Ansprüche 11 bis 13, bei dem mehrere Textilglasfasern von mehreren Vorratsspulen abgezogen und zu einem Faserband zusammengeführt werden und das Tränken der Textilglasfasern vorzugsweise nach dem Zusammenführen der Textilglasfasern zu dem Faserband erfolgt.

15. Verfahren gemäß einem der Ansprüche 11 bis 14, bei dem ein Aushärten des zunächst flüssigen Harzes erfolgt, nachdem die Textilglasfasern auf die Umfangsfläche des Rohres aufgebracht sind, wobei. die harzgetränkten, auf die Umfangsfläche des Rohres aufgebrachten Textilglasfasern um Aushärten des Harzes vorzugsweise mit UV-Licht bestrahlt werden.
